# EUROPEAN PATENT APPLICATION

(11) **EP 1 968 021 A2**
(43) Date of publication of application: **10.09.2008**
(21) Application number: 08102316.0
(22) Date of filing: 05.03.2008
(51) Int. Cl.: G07F 7/08, G06Q 20/00

(54) **A payment method**

(30) Priority: 05.03.2007 TR 200701346
(71) Applicant: Fonoklik Iletisim Hizmetleri Ve Ticaret Anonim, 34398 Istanbul (TR)
(72) Inventor: Yurekli, Ahmet FONOKLIK ILETISIM HIZMETLERI VE TICARET ANONIM, AYAZAGA ISTANBUL (TR)
(74) Representative: Dericioglu, Ekin

(57) **Abstract**

The present invention relates to a method for making a payment with a credit card to a remote seller in a secure way by a buyer.

## Description

This invention relates to a method for a buyer to make a payment with a credit card to a remote seller in a secure way.

Prior Art

Credit cards are commonly used to make payments. This is usually done by using Point of Sale (POS) machines located at the seller's locations. Using the credit card in a POS machine comprises the following steps: the buyer brings the credit card to the terminal, the card is slid through or inserted into the machine and the amount to be paid is entered into the keypad on the POS machine, the pin of the card(if available) is entered, and the transaction data is transmitted to the seller's bank via a telephone or data connection.

In the event of a remote sale when the buyer isn't present in the seller's location, as in the case of a mail order sale, after the buyer gives the credit card information via a telephone or in another way to the seller, the seller may manually enter the card data into the POS machine or otherwise transmit the data to the bank for processing.

However, in such situations(remote sale) it may not be secure for the buyer to provide the credit card information to the seller, since such information may also be used to make unauthorized payments, and not all sellers have sufficient data protection measures to prevent such unauthorized access to customer card information. Furthermore it is not efficient to have a POS machine at a location where credit card transactions are rarely needed, and other data terminals are not available.

In the state of the art US5727163 discloses a shopping method in which the buyer enters the credit card information into the IVR (interactive voice response) system of the seller to place an order.

Brief Description of the Invention

The object of the present invention is to provide a payment method ensuring security for the buyer and ease of use for the seller.

Detailed Description of the Invention

The payment method according to the invention is illustrated in the accompanying drawings, in which:

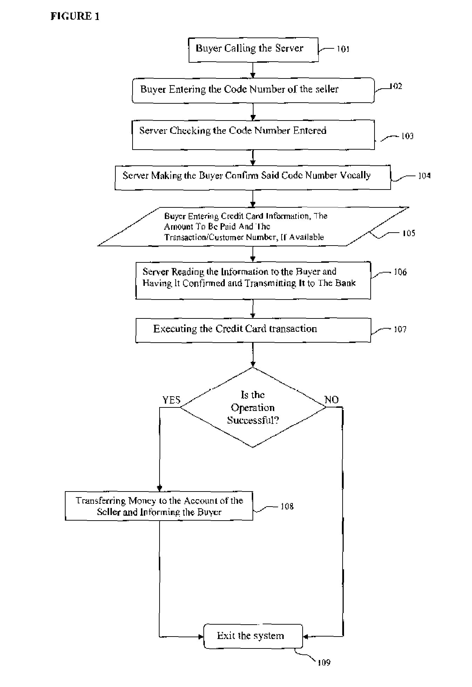

Figure 1 shows a flowchart of a payment method.

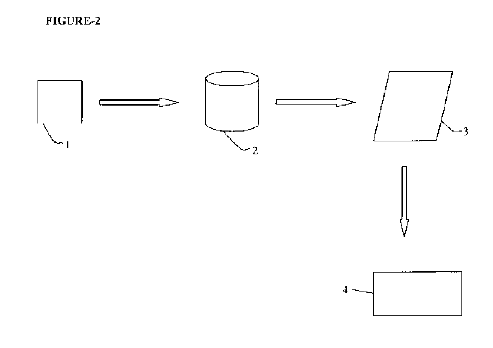

Figure 2 shows a block diagram of a payment method.

The parts in the figures are each given a reference numeral as follows:

1. Buyer

2. Server

3. Operation Centre

4. Seller

A payment method comprising at least one server (2) enabling a secure transaction between the buyer (1) and the seller (4) and operating an IVR (interactive voice response) system,

and characterized by the following steps:

- the buyer (1) calling the server (2) (101)

- the buyer entering the code number of the seller into the server (2) (102)

- the server (2) checking the validity of the code number entered (103)

- the server (2) making the buyer (1) confirm the code number vocally (104)

- the buyer (1) entering credit card information and the amount to be paid and also the transaction/customer number, if available (105)

- the server (2) reading the information to the buyer (1) and having it confirmed and transmitting it to the operation centre (4) (106)

- executing payment transaction with the credit card (107)

- Checking the result of the transaction

- -If not successful, offering to restart transaction or exiting the system (109)

- -If successful, transfering the money to the seller's account and informing the buyer (108)

- Exiting the system (109).

In the preferred application of the present invention when the buyer would like to make a payment, he/she may call the system using a mobile or a fixedline phone and the money is transferred in a short time and in a secure way.

The system provides the sellers preferably at least one seller number and/or seller code. When the buyer calls the service provider, the IVR system replies and the buyer enters the seller number of the seller, the amount to pay, transaction or customer tracking number, credit card information and answers the security questions into the IVR.

All the information is read back to the buyer and confirmed, then details of the operation are transmitted to the operation centre (bank) with which the seller has contracted and thus to the issuing bank of the buyer's credit card. After the operation is completed the buyer is optionally informed of all the operation via SMS, email, web or any other ways.

In another application of the invention the buyer is met by a live operator and live operator realizes the registry/data entry and control of all the operations.

In the payment method subject to this invention, credit card information is not given to the seller, thereby ensuring a secure payment method for the buyer. And also the seller does not necessarily have a POS machine and what is more the buyer can make the payment even the seller's sales location is closed.

Within the scope of this main concept, it is possible to develop various applications of the invention and the invention cannot be limited to the examples stated herein and is actually as in the claims.

## Claims

1. A payment method in its most basic form, mainly comprises of at least one server (2) enabling a secure transaction between the buyer (1) and the seller (4) and operating an IVR (interactive voice response) system, and **characterized by** the following steps ;the buyer (1) calling the server (2) (101) ; the buyer entering the code number of the sales location to be paid into the server (2) (102) ;the server (2) checking the validity of the said code number entered (103) ;the server (2) making the buyer (1) confirm the said code number vocally (104) ;the buyer (1) entering credit card information and the amount to be paid and also the transaction/customer number, if available (105) ; the server (2) reading the information to the buyer (1) and having it confirmed and transmitting it to the operation centre (4) (106) ;executing the payment transaction with the credit card (107) ; Checking the result of the transaction ; If not successful, offering to restart transaction or exiting the system (109) ;If successful, transfering the money to the seller's account and informing the buyer (108) ;Exiing the system (109).
